# EUROPEAN PATENT APPLICATION

(11) **EP 1 762 970 A1**
(43) Date of publication of application: **14.03.2007**
(21) Application number: 06016725.1
(22) Date of filing: 10.08.2006
(51) Int. Cl.: G06Q 10/00

(54) **System to automate provision of contributions to an electronic communication**

(30) Priority: 29.08.2005 US 215784
(71) Applicant: SAP AG, 69190 Walldorf (DE)
(72) Inventor: Schultz, Karsten A., Middle Park QLD 4074 (AU)
(74) Representative: Müller-Boré & Partner Patentanwälte

(57) **Abstract**

A system to automate provision of contributions, from a plurality of contributors to an electronic communication. includes an electronic communication system to receive, from an originator of electronic communication, identifiers for the plurality of contributors to the electronic communication. The identifiers are received by the electronic communication system as a single input. A workflow system automatically progresses the electronic communication to each of the plurality of contributors, the automatic progressing of the electronic communication by the workflow system being performed utilizing the identifiers. The automatic progressing also enables each of the plurality of contributors to provide a respective contribution relating to the electronic communication.

## Description

### FIELD

This application relates to a method and system to automate the processing of electronic data and, in one example embodiment, to a method and a system to automate the provision of contributions, from a plurality of contributors, to an electronic communication (e.g., an email).

### BACKGROUND

Obtaining input to an electronic communication (e.g., an email) from a team of people is a cumbersome undertaking, utilizing current technology. For example, should an author of an email wish to solicit contributions to the email from a group of people, the author may send the email in parallel to the entire group, and then receive piecemeal contributions in response. The author then is required to accumulate and synthesize the contributions of received back from the team into a final work product before this can be sent to a recipient.

Alternatively, the author may sequentially send the email to a first contributor, receive the email back, send it to a second contributor, and receive the e-mail back, repeating these steps until all contributors have had the opportunity to contribute to the work product. At this stage, the author may then send the final email to the recipient.

It will be appreciated that the above described parallel and sequential methods of soliciting contributions from a team of contributors is very demanding on the time and resources of the author. The author may be required to continually follow up with contributors that do not respond, monitor the progress of the email through the team of contributors, and synthesize contributions received in a piecemeal manner into an acceptable work product.

While the above described parallel and sequential processes may be valid for certain mission-critical communications in which the final work product is required to be very precise and accurate, such processes may be overly complex and burdensome in cases where a less comprehensive communication (e.g., an 80% solution) is sufficient, since it is expected that an iterative discussion may follow. Examples of such communications may include, for example, development of a project plan, the structure of a local project, the arrangements for a conference etc.

Further, the above described prior art methodologies of manually soliciting contributions in either a parallel of a sequential manner, in addition to imposing burdens on authors of electronic communications and contributing teams, may provide unnecessary burdens on electronic communication systems (e.g., email systems) in that the network traffic resulting from the back and forth between the author and the contributors increases resource consumptions by such electronic communication systems. The storage of such multiple electronic communications also consumes memory and storage resources for such electronic communication systems.

### SUMMARY

According to an aspect of the invention, there is provided a system to automate provision of contributions, from a plurality of contributors, to an electronic communication. The system includes an electronic communication system to receive, from an originator of electronic communication, identifiers for the plurality of contributors to the electronic communication. The identifiers are received by the electronic communication system as a single input. A workflow system automatically progresses the electronic communication to each of the plurality of contributors, the automatic progressing of the electronic communication by the workflow system being performed utilizing the identifiers. The automatic progressing also enables each of the plurality of contributors to provide a respective contribution relating to the electronic communication.

Other features of the present invention will be apparent from the accompanying drawings and from the detailed description that follows.

### BRIEF DESCRIPTION OF DRAWINGS

The present invention is illustrated by way of example and not limitation in the figures of the accompanying drawings, in which like references indicate similar elements and in which:

**Figure 1** is a block diagram illustrating a system, according to an example embodiment of the present invention, to automate the provision of contributions, from a plurality of contributors, to an electronic communication.

**Figure 2** is a flow chart illustrating a method, according to an example embodiment to the present invention, to automate the provision of contributions to an electronic communication.

**Figure 3** is a flow chart illustrating a method, according to an example embodiment to the present invention, for the provision of contributions to an email, the email comprising an example of an electronic communication.

**Figures 4 and 5** show workflow processes, according to an example embodiment, to progress an electronic communication through a plurality of contributors.

**Figures 6 - 8** show user interfaces, according to three different embodiments of the present invention, which may be presented by an electronic communication system to an initiator in order to automate the provision of contributions from a plurality of contributors.

**Figure 9** shows a diagrammatic representation of machine in the example form of a computer system within which a set of instructions, for causing the machine to perform any one or more of the methodologies discussed herein, may be executed.

**DETAILED DESCRIPTION**

In the following description, for purposes of explanation, numerous specific details are set forth in order to provide a thorough understanding of an embodiment of the present invention. It will be evident, however, to one skilled in the art that the present invention may be practiced without these specific details.

One embodiment of the invention seeks to provide an electronic communication (e.g., email, Instant Message (IM), SMS etc.) solution whereby contributors can provide contributions to an electronic communication, without unduly delaying or blocking delivery of the communication (e.g., by a contributor failing to deliver input), and also without the need for the initiator of the electronic communication, at different times, to have to readdress and redirect the electronic communication to a number of contributors.

One embodiment envisages a situation in which an initiator prepares an initial draft of an electronic communication, in much the same way as such a draft would be prepared if it were to be sent directly to an eventual and final recipient. A system, according to an example embodiment, progresses the electronic communication past each of the contributors in a certain order (e.g., a daisy chain order, a sequence order, an availability order, or a random order) and also can apply temporal constraints (e.g., deadlines) to the provision of the contributions from each of the contributors. Within such temporal constraints, contributors have the opportunity to provide any one of a number of contributions, or to complete any one of a number of tasks, pertaining or relating to the electronic communication. Such contributions may include, for example, a review of the electronic communication and/or modifying or editing the communication.

In the example embodiment, once the temporal constraints are evaluated to be true (e.g., a deadline has expired), the electronic communication will automatically be removed from the relevant contributor's domain (e.g., removed from the reviewer's email box). The electronic communication will then be sent to the next contributor, and eventually to the intended recipient, with the originator receiving a copy of the communication sent to the recipient. In one embodiment, the electronic communication may be sent back to the originator for a final review, prior to delivery to the recipient.

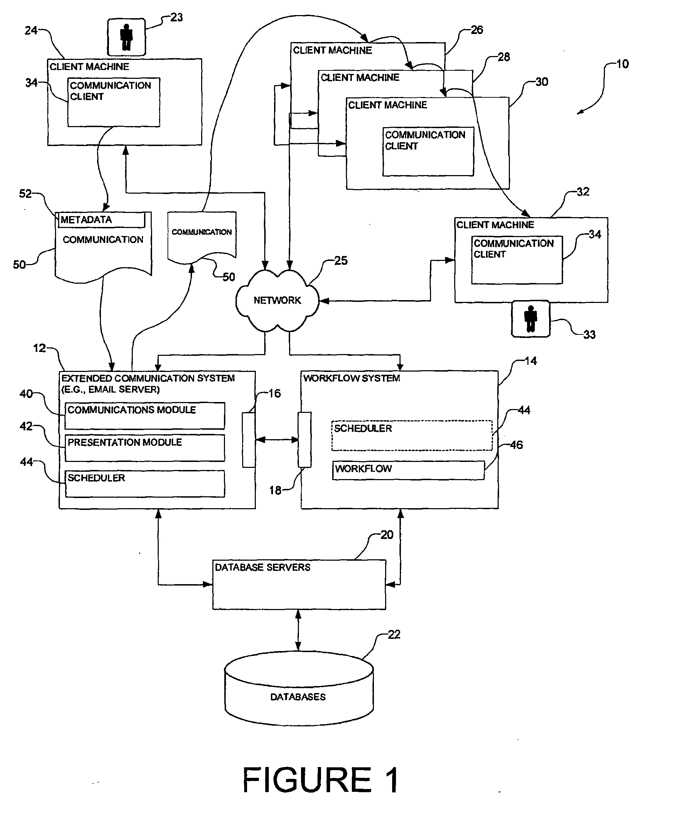

**Figure 1** is a block diagram illustrating a system 10, according to an example embodiment, to automate the provision of contributions, from a number of contributors, to an electronic communication. The system 10 includes an extended communication system 12, in the example form of an extended email system, and a workflow system 14, which are communicatively coupled through appropriate interfaces 16 and 18. Each of the systems 12 and 14 has access to one or more database servers 20, which enable the systems 12 and 14 to access one or more databases 22. For example, where the extended communication system 12 is an email or personal information management (PIM) system, the databases 22 may include email contact, calendar and task tables, for example. Further, the workflow system 14 may store various workflow definitions, and associated data, in the databases 22.

Each of the extended communication system 12 and the workflow system 14 are accessible, via a network 25 (e.g., the Internet, a Local Area Network (LAN) or a Wide Area Network (WAN)), by a number of client machines 24-32. Client machine 24 is shown to be associated with an originator 23 of an electronic communication 50, and client machine 32 is shown to be associated with an eventual recipient 33 of the electronic communication 50. Each of the client machines 24-32 also hosts a communication client 34 (e.g., an email or Personal Information Management (PIM) application, such as the Outlook! Application developed by a Microsoft Corporation of Redmond, Washington State, or a Web browser).

Turning now specifically to the architectures of the extended communication system 12 and the workflow system 14, the extended communication system 12 includes a number of communication modules 40 which operate to enable communications between the communication clients 34 executing on the various client machines 24-32. Such communication modules 40 may include components typically found, for example, in an email server, such as the (MS Outlook email server). In addition to the communications modules 40, the extended communication system 12 includes a presentation module 42 that, in one example embodiment, presents an electronic communication to a user of a communication client 34 in a non-standard manner and as part of the progression of electronic communication to a number of contributors. For example, in one embodiment, the presentation module 42 operates to place an email in the inbox of a user's email client, without having the system 12 "send" the email in the typical sense. Here, an email delivered to an inbox by the presentation module 42 would not appear to have been sent in terms of information in the message metadata (e.g., the forwarding data). Further, the presentation module 42 may operate to present an electronic communication to a user of a PIM application in number of ways. For example, an email may be placed in a user's task manager of the PIM application (e.g., Microsoft Outlook) by a presentation module 42, in one example embodiment. To this end, the presentation module 42 may interact with one or more of the communication modules 40, thereby effecting a presentation of an electronic communication to a user of a communication client 34 in a manner that is differentiated (e.g., in terms of the message metadata) from other more typical communications presented by the communication client 34 to a user.

The communications modules 40 further also operate to send an electronic communication to an eventual recipient (e.g., the user of client machine 32) on the occurrence of a predetermined delivery event. The predetermined delivery event may be communicated to the communication modules 40 by the workflow system 14 and/or the scheduler 44. Examples of delivery events include completion of a last task and/or contribution by a last contributor with respect to the electronic communication (e.g., as determined by the workflow system 14), the expiration of an overall contribution time period with respect to the electronic communication (e.g., determined by the scheduler 44), or receipt of approval, from an originator, for the relevant electronic communication to be sent to a recipient.

The workflow system 14 operatively processes a list of contributors, identified utilising a list of identifiers receive as a single (e.g., concurrent) input to the extended communication system 12, and also operatively communicates with the presentation module 42 to sequentially present the electronic communication to a group or team of contributors. The workflow system 14 is shown to instantiate a workflow 46 based on metadata received at the extended communication system 12 from the originator 23, the metadata being received in association with the electronic communication.

The workflow system 14 operatively computes the available time, or a predetermined time interval, that an electronic communication will be presented, by the presentation module 42 to a user of a communication client 34. The computation of the available time to a contributor may be computed based on an expected delivery date or time of an electronic communication, taking into account a number of contributors and also the business (or work) hours that are available to each of the contributors. In determining the number of work hours that are available to each of the contributors, the workflow system 14 may access calendar information, stored by the extended communication system 12 in the databases 22, and may also access profile information regarding each of the contributors. For example, the workflow system 14 may examine the calendar of a particular contributor to assess how much available time the respective contributor has to make a contribution to the electronic communication, before the delivery deadline. Also, a profile of a particular contributor may indicate that the contributor is only working part time, and a computation of the available time for a particular contributor may be computed to take this information into account.

In one embodiment, the scheduler 44 may form part of the workflow system 14, as shown in a broken line, instead of being included within the extended communication system 12. In a further embodiment, the workflow system 14 need not be a system separate from the extended communication system 12 but could be an integrated module (e.g., a plug-in) to the extended communication system 12.

**Figure 1** shows the transmission of an electronic communication 50 from the originator 23 to the extended communication system 12. The communication 50 includes a metadata 52 that is communicated to the workflow system 14, and then parsed and utilized by the workflow system 14 to instantiate the workflow 46. The electronic communication 50 is automatically progressed in accordance with the workflow 46 to each of a number of contributors. The metadata includes identifiers, (e.g., email addresses, IM user names, SMS numbers etc.) that are utilized by the systems 12 and 14 to identify the contributors, and to present the electronic communication 50 to each of the contributors. The metadata 52 may further include an identifier for the eventual recipient 33, an expected delivery date and time for the delivery of the electronic communication to the recipient 33, and an indication regarding whether the originator 23 wishes to perform a final review of the communication before it is sent to the final recipient.

In a further embodiment, the metadata 52 may include further specification information, as provided by the originator 23, regarding the progression of the electronic communication 50 past the contributors. For example, the metadata 52 may include specifications by the originator 23 as to what contribution (e.g., review, editing, supplementation etc.) is required by each of the contributors, and also temporal constraints (specified by the originator 23) with respect to the time available to each of the contributors to make a respective contribution. However, in the embodiment described below, it would be assumed that the workflow system 14 automatically calculates the available time to each contributor, based on known factors, and also that a common contribution (e.g., review) is required from each of the contributors. Accordingly, in the example embodiment discussed below, the metadata 52 is not described as including temporal specifications provided by the originator 23.

**Figure 1** also shows that, following receipt of the electronic communication 50 at the extended communication system 12, the electronic communication 50 is automatically progressed past each of a number of contributors, in accordance with the workflow 46, and eventually delivered to the recipient 33. It will be noted that the progression of the electronic communication 50 is in a time sequential manner, from one contributor to the next, and occurs without any further progression input from the originator 23. Of course, the electronic communication 50 may be again presented to the originator 23, if so requested in the metadata 52, prior to a final delivery to the recipient 33. However, having authored the original electronic communication 50, and the associated metadata 52, the systems 12 and 14 operate to progress the electronic communication 50 past each of the contributors in an automated manner, and so as to enable each of the contributors to provide a respective contribution to the electronic communication 50.

Further details regarding this process will now be described above with reference to a number of example embodiments.

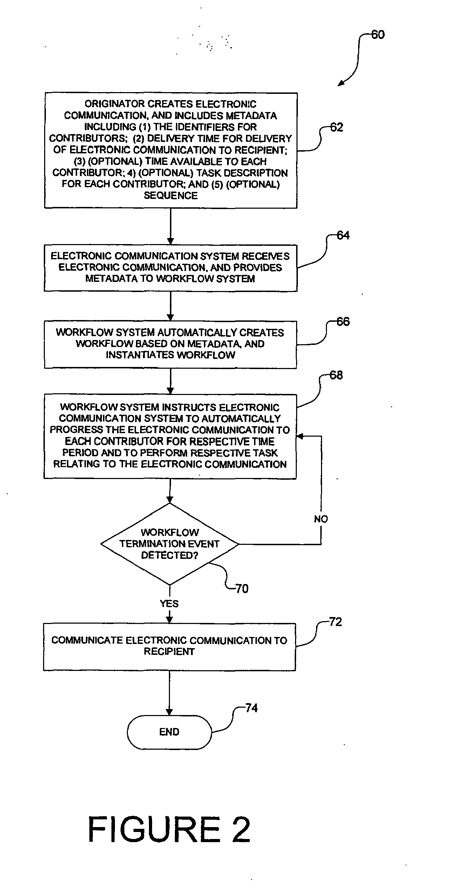

**Figure 2** is flow chart illustrating a method 60, according to an example embodiment, to automate a collection of contributions, from a number of contributors, to an electronic communication 50. The method 60 is described below as being performed by the system 10 described above reference to **Figure 1.**

At block 62, the originator 23 creates the electronic communication 50, including the metadata 52. For example, where the communication client 34 is an email client, the electronic communication 50 may comprise an email, with the metadata 52 including identifiers in the form of email addresses for each of the contributors and for the recipient 33. A user interface presented by a communication client 34 may enable the originator 23 to differentiate between the identifiers of the contributors and that of the eventual recipient (or recipients). The metadata 52 created at block 62 may further include a delivery time for delivery of the electronic communication 50 to the recipient 33.

The metadata 52 may also optionally include a respective time available to each of the contributors to provide a contribution to the electronic communication, and a description and/or specification of a contribution (e.g., a task) that the originator 23 requires from each of the contributors.

At block 64, the electronic communication system 12 receives the electronic communication 50, and the associated metadata 52, from the client machine 24 of the originator 23, and communicates the metadata 52 to the workflow system 14 via the interfaces 16 and 18.

At block 66, the workflow system 14 automatically creates and/or instantiates the workflow 46 based on the received metadata 52. The workflow system 12, in one embodiment, automatically calculates a time period (or interval) to allocate to each contributor to provide a contribution, this calculation taking into account the delivery date and time for the electronic communication, the number of contributors, the number of work hours available to each contributor (or to the contributors as a whole).

The workflow 46 also specifies a sequence in which the electronic communication 50 is progressed past the team of contributors. This sequence may be determined based on any one of a number of factors. In one embodiment, the sequencing is determined by an organizational hierarchy applicable to the contributors. For example, it may be most useful to sequence the progression of the electronic communication 50 so as to receive contributions from the more junior contributors of an organizational hierarchy of prior to presenting the electronic communication to more senior contributors. To this end, the workflow system 14, when creating the scheduling, may reference organizational hierarchy information as stored within the databases 22.

In another embodiment, the sequencing of the progression may be performed with reference to calendars of the various contributors. For example, the workflow system 14 may determined, from calendar information stored within the databases 22, that a certain contributor only becomes available at a time closer to the delivery deadline for the electronic communication 50. Accordingly, the sequencing of the electronic communication 50 may be established such that the electronic communication 50 is only presented to the relevant contributor at a time when he or she becomes available.

In yet another embodiment, the sequencing of the-electronic communication 50 may be determined based on the respective contributions that are required or requested from each of the contributors with respect to the electronic communication 50. For example, the contribution of a first contributor may be the input or authoring of a large volume of text to be included into the electronic communication 50, whereas the contribution of a further contributor may be to perform a final review of the electronic communication prior to transmission to the recipient 33. In this case, the contributor authoring text is scheduled earlier in the sequence than the contributor performing the review. Here, the sequencing may be determined with reference to a contribution description, received from the originator 23, for each of the contributors.

Moving on to block 68, the workflow system 14 instructs, via the interfaces 16 and 18, the electronic communication system 12 to automatically progress the electronic communication 50 to each of the contributors, for a respective time period, so as to enable the respective contributors to provide a contribution (e.g., perform a task) relating to the electronic communication 50. The workflow system 14 may message the presentation module 42 in order to provide the presentation module 42 with an indication of a time at which the electronic communication 50 should be withdrawn from a preceding contributor (if present), and then presented to a next contributor. In an alternative embodiment, the workflow system 14 provides the scheduling information to the presentation module 42 in a batch mode, with the scheduler 44 utilizing the sequencing information to sequentially present the electronic communication 50 to each of the contributors, prior to the communication modules 40 sending the electronic communication 50 to the recipient 33.

At block 70, a determination is made whether a workflow termination event is detected. In one embodiment, the workflow termination event may constitute a predetermined delivery event, triggering a transmission of the electronic communication 50 to the recipient 33 at block 72. If no workflow termination events are detected, the method 60 continues to progress the electronic communication 50 through the contributors at block 68, until such a termination event is detected at decision block 70.

In various embodiments, the workflow termination events detected at block 70 may include the completion of a last task by a last contributor of a team of contributors, the expiration of an overall contribution time period specified for the electronic communication, a passing of the delivery date/time for the electronic communication, and the receipt of approval of from the originator 23 for the electronic communication to be transmitted to the recipient 33. The method 60 ends at block 74.

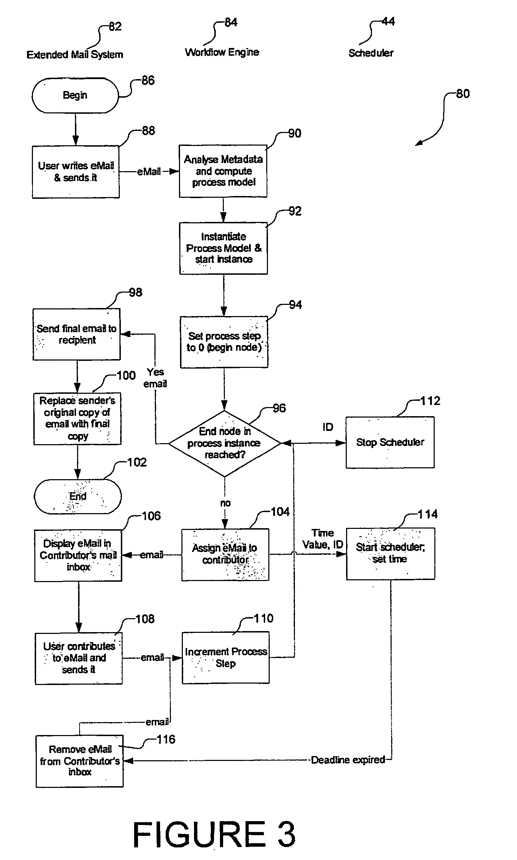

**Figure 3** is a flow chart illustrating a method 80, according to an example embodiment, to receive provision contributions, from a number of contributors to an email communication. The method 80 is discussed with reference to an embodiment in which the extended communication system 12 comprises an extended email system 82, and the workflow system 14 comprises a workflow engine 84 that may be included as a component of the extended email system 82.

The method 80 commences at block 86 and progresses to block 88 where an originator 23 composes an email communication, including metadata including an email address of an intended recipient, the email addresses of one or more contributors, an expected delivery date and time, and an indication as to whether the originator 23 wishes to perform a review of a final draft of the email prior to it being transmitted to the recipient 33.

The email is then communicated, together with the metadata 52 to the workflow engine 84, which proceeds to compute a workflow in the form of a process model at block 90 and to instantiate the process model at block 92, where after the instance of the process model is started. At block 94, a process step is set to zero (e.g., begin node). Specific of, in one embodiment, the process may be represented by a series of nodes, each node representing parameters pertaining to the presentation of the email to a respective contributor.

At decision block 96, a determination is made by the workflow engine 84 whether the end node in the process is reached. This determination is made in order to assess whether the electronic communication has been progressed to the last contributor of a sequence of contributors specified in terms of the process model.

Following a positive determination at decision block 96, a message is sent from the workflow engine 84 to the extended email system 82 to send the final and fully contributed email to the recipient 33, this transmission occurring at block 98.

At block 100, the extended email system 82 replaces an original copy of the email, residing in a "sent folder" of the originator 23 with the final and fully contributed email, where after the method 80 terminates at block 102.

Returning to decision block 96, if it is determined that the end node of the instance of the process model has not been reached, the method 80 progresses to block 104. The workflow engine 84 assigns the partially-contributed email to a next contributor, as specified in terms of the instance of the process model. A message (or other communication) is then sent from the workflow engine 84 to the extended email system 82, where the presentation module 42 proceeds to display the partially-contributed email in the contributor's mail inbox at block 106. At block 108, the contributor then contributes to the partially-contributed email (e.g., by performing a specified or non-specified task with respect to the electronic email) and transmits an indication that the contribution is complete back to the workflow engine 84. In one embodiment, this indication may comprise the contributing user pressing a "send" button displayed by the extended email system 82 or by selecting a "contribution complete" button also displayed by the system 82.

At block 110, the workflow engine 84 proceeds to increment the process step, where after the method 80 loops a, back to decision block 96.

Dealing specifically with the functioning of the scheduler 44 it will be noted that the scheduler 44 is stopped at block 112, responsive to the communication to the scheduler 44 of an identifier identifying a relevant node of the instance of the process model. The node ID is sent to the scheduler 44 responsive to the determination that the end node in the instance of the process model has been reached.

The scheduler 44 is also started, for a predetermined time interval, responsive to receipt of a node identifier and a time value indicative of the predetermined time interval, at block 114. Accordingly, the scheduler 44 is started, at block 114, for a predetermined time period responsive to the assignment of the email to a next contributor at block 104. As is indicated in Figure 3, should the predetermined time period monitored by the scheduler 44 at block 114 expire, the method 80 progresses to block 116, where the partially-contributed email is again removed from the current contributor's inbox, and the method 80 then moves on to increment the process step at block 110. Accordingly, the process step is incremented at block 110 responsive to two events, namely a user completing a contribution to an email and sending it at block 108, or the expiration of a predetermined time period, represented by the time value communicated to the scheduler 44, for the delivery or provision of a contribution from a relevant contributor.

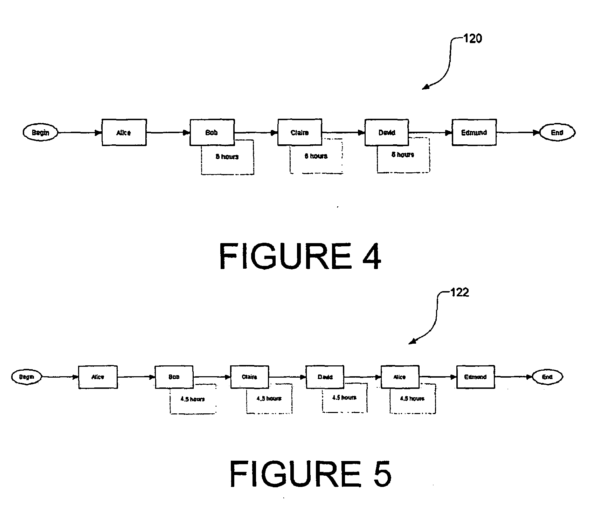

**Figures 4** and **5** illustrate example instances of process models that may be executed in terms of the method 80 described above. The first instance 120 of the process model illustrates a sequence of contribution nodes for an electronic communication, in which (1) Alice is an originator, (2) Bob, Claire, and David are contributors and (3) Edmund is a final recipient. The instance 122 shows a sequence for which (1) Alice is the originator, (2) Bob, Claire and David are contributors, (3) Alice performs a review of the final draft before it is sent to the recipient, (4) Edmund. In each of the instances 120 and 122, consider that Alice may want to send an email to Edmund with her thoughts on a book editing project. However, Alice would like Bob, Claire and David to contribute in case they have any further ideas. However, since this project is in the early phases, it will be acceptable if only a few and not all people are able to contribute.

Accordingly, Alice drafts the email and addresses it to Edmund with the names of Bob, Claire and David in the CC-field of the email. Alice then sends the email with a special option "SEND AND REQUEST CONTRIBUTION", and selects a delivery dateline by which the email should be delivered to Edmund (e.g., in "2 business days").

The extended email system 82 receives the email, and presents it in Bob's inbox, flags the email as requiring a contribution, and sets an expiry time, (e.g., six hours in the case of the instance 120). Within that time period, Bob can edit the email. Once he has finished editing the email (or making some other contribution), he simply selects the "send" button on his email client to send the email, as he would normally do.

The email is then removed from Bob's inbox, and presented in Claire's inbox, also for a contribution within six hours. Assume, for example, that Claire is too busy to contribute to the email. In this case, it will be automatically removed from her inbox after six hours, and then presented within David's inbox.

After David has finished making his contribution, the email, in the instance 120, is delivered to Edmund, with Alice, Bob, Claire and David also each receiving carbon copies for their information. The email will at this point also be copied into Alice's sent items folder, replacing the initial daft email that Alice prepared.

Referencing the second instance 122 shown in **Figure 5,** it will be noted that Alice opted to review the final draft prior to it being transmitted to Edmund. In this case, there is an additional step in the process. Consequently, the time available to each step is reduced from the six hours, in the instance 120, to 4.5 hours in the instance 122 in order to meet the deadline. In the exemplary embodiment, the calculation of the amount of time available to each of the contributors to make a respective contribution is calculated by the workflow engine 84, in the manner described above.

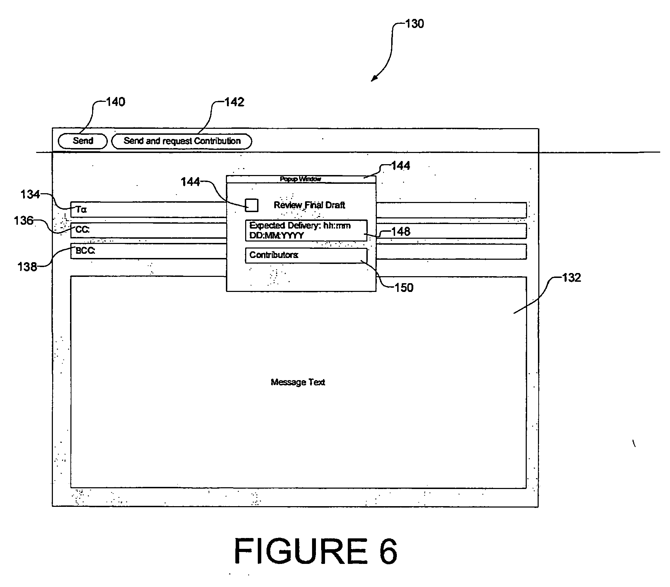

**Figures 6-8** illustrate exemplary user interfaces that may be presented by the extended communication system 12 to an originator 23 in order to enable the originator 23 to author the electronic communication 50, as well as the above-described metadata 52. In the example embodiments, the interfaces are presented in such a way that an originator 23 can express collaboration requirements with minimal changes to a user's current and familiar email experience.

Turning first to **Figure 6**, a user interface 130, according to an example embodiment, includes a message text area 132 into which the originator 23 can input text (and other content) that constitute an original draft of the electronic communication 50. The interface also includes addressing fields, in the form of the "TO:" field 134, a "CC:" field 136, and a "BBC:" field 138. In addition to a "SEND" button 140 that is user selectable to send an electronic communication in a regular manner, the interface 130 includes a "SEND AND REQUEST CONTRIBUTION" button 142 which, when selected by a user, invokes a pop-up window 144. The originator 23 can input a list of contributors, temporal aspects of delivery of the electronic communication, and whether or not the originating user wants to review the final draft into this pop-up window 144. To this end, the pop-up window 144 includes a check box 146 that the user can activate to exercise an option to review a final draft of the electronic communication, an expected delivery date and time field 148, and a contributors field 150. The originator 23 may input identifiers (e.g., email addresses) for the list of contributors into the contributors field 150. In one embodiment, the order in which the originator 23 specifies the identifiers within the contributors field 150 determines the sequence in which the electronic communication is progressed through the list of contributors for contribution. In other embodiments, the sequence may be determined by any of the methodologies described above.

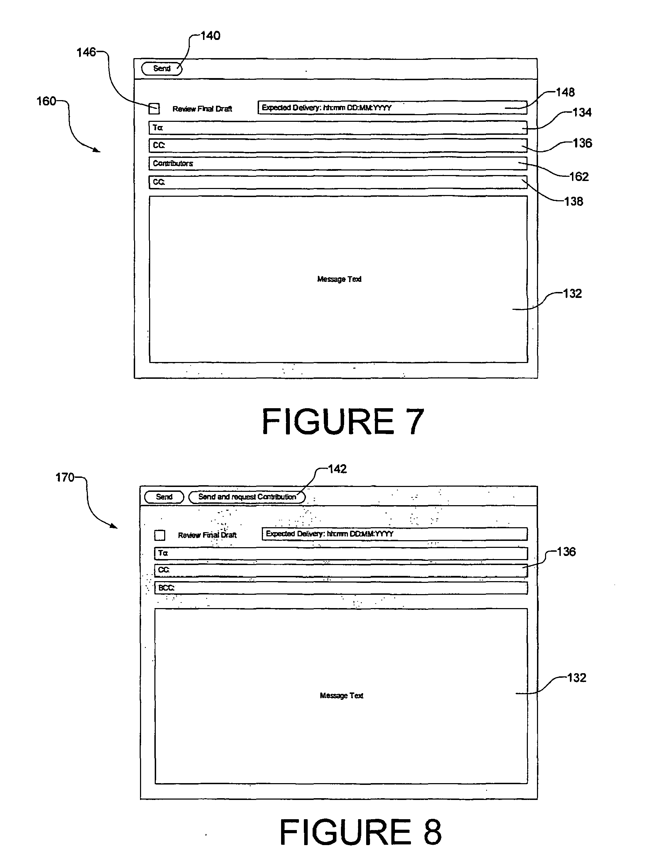

**Figure 7** illustrates an interface 160, according to a further example embodiment, in which, as opposed to having an explicit "SEND AND REQUEST CONTRIBUTION" button 142 such as that shown in **Figure 6,** the addressing fields include a contributors field 162 into which the originator 23 can provide a list of contributors. By providing data into the contributors field 162, the originator 23 may explicitly request that the email, once sent, be provided to the contributors for review, prior to being delivered to one or more recipients that may be identified in the fields 134, 136 and 138.

**Figure 8** illustrates a user interface 170, according to a further example embodiment, in which an implicit user interface approach is implemented. Specifically, the recipients listed in the "CC:" field 136 are interpreted by the extended communication system 12 as being contributors when the electronic communication is sent by user selection of the "SEND AND REQUEST CONTRIBUTION" button 142.

From the above, it will be appreciated that an embodiment of the present invention may provide a technical advantage, in that it may reduce load on an extended communication system 12 by avoiding communications between the extended communication system 12 and a client machine of an originator 23 in order to progressively and successively advance an electronic communication through a group of contributors. Specifically, the extended communication system 12, in conjunction with the workflow system 14, operates to automatically sequence and advance the electronic communication 50 through the group of contributors based on the received metadata 52 received as a single, concurrent input at the extended communication system 12.

Further, in one embodiment, by automatically advancing the electronic communication 50 from one contributor to the next at the expiration of a predetermined contribution time interval, the system also reduces communications and load on the extended communication system 12, in that the originator 23 is not required to follow-up and chase down a contributor that does not have the time to make a contribution. In addition to providing the above technical advantages, embodiments of the present invention make the soliciting and provision of contributions, by a number of contributors to a single electronic communication, less cumbersome and requiring less communications between an originator and contributors.

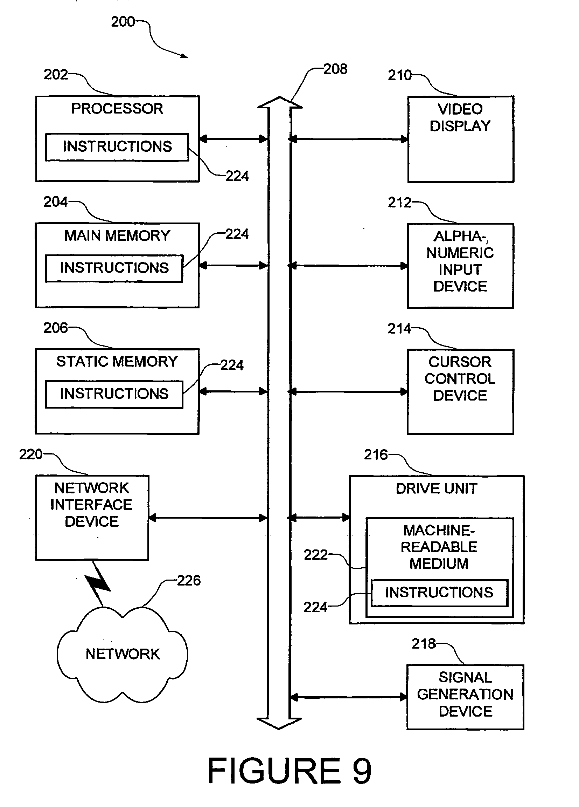

**Figure 9** shows a diagrammatic representation of machine in the example form of a computer system 200 within which a set of instructions, for causing the machine to perform any one or more of the methodologies discussed herein, may be executed. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 200 includes a processor 202 (e.g., a central processing unit (CPU), a graphics processing unit (GPU) or both), a main memory 204 and a static memory 206, which communicate with each other via a bus 208. The computer system 200 may further include a video display unit 210 (e.g., a liquid crystal display (LCD) or a cathode ray tube (CRT)). The computer system 200 also includes an alphanumeric input device 212 (e.g., a keyboard), a user interface (UI) navigation device 214 (e.g., a mouse), a disk drive unit 216, a signal generation device 218 (e.g., a speaker) and a network interface device 220.

The disk drive unit 216 includes a machine-readable medium 222 on which is stored one or more sets of instructions and data structures (e.g., software 224) embodying or utilized by any one or more of the methodologies or functions described herein. The software 224 may also reside, completely or at least partially, within the main memory 204 and/or within the processor 202 during execution thereof by the computer system 200, the main memory 204 and the processor 202 also constituting machine-readable media.

The software 224 may further be transmitted or received over a network 226 via the network interface device 220 utilizing any one of a number of well-known transfer protocols (e.g., HTTP).

While the machine-readable medium 222 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present invention, or that is capable of storing, encoding or carrying data structures utilized by or associated with such a set of instructions. The term "machine-readable medium" shall accordingly be taken to include, but not be limited to, solid-state memories, optical and magnetic media, and carrier wave signals.

Although an embodiment of the present invention has been described with reference to specific example embodiments, it will be evident that various modifications and changes may be made to these embodiments without departing from the broader spirit and scope of the invention. Accordingly, the specification and drawings are to be regarded in an illustrative rather than a restrictive sense.

## Claims

1. A system to automate provision of contributions from a plurality of contributors to an electronic communication, the system including:
an electronic communication system to receive, from an originator of the electronic communication, identifiers for the plurality of contributors to the electronic communication, the identifiers being received as a single input at the electronic communication system; and
a workflow system to automatically progress the electronic communication to each of the plurality of contributors, the automatic progressing of electronic communication by the workflow system being performed utilizing the identifiers, and enabling each of the plurality of contributors to provide a respective contribution relating to the electronic communication.

2. The system of claim 1, wherein the workflow system is to automatically progress the electronic communication, once the progression has been initiated, without further progression input from the originator of the electronic communication.

3. The system of claim 1 or 2, wherein the electronic communication system is to communicate the electronic communication to a recipient on the occurrence of a predetermined delivery event.

4. The system of claim 3, wherein the predetermined delivery event is at least one of a group of events including:
completion of a last task by a last contributor of the plurality of contributors;
an expiration of an overall contribution time period with respect to the electronic communication; and
receipt of approval, from the originator, for the electronic communication to be sent to the recipient.

5. The system of claim 1, wherein the workflow system is to provide each of the plurality of contributors with a respective time period within which to provide the respective contribution relating to the electronic communication.

6. The system of claim 5, wherein the workflow system is to instantiate a workflow, the workflow specify the respective time period for each of contributors to provide the respective contribution to the electronic communication

7. The system of claim 6, wherein the workflow system is automatically to determine the respective time period for each of the plurality of contributors.

8. The system of claim 7, wherein the workflow system is to automatically determine the respective time period for each of the plurality of contributors based on at least one of:
a delivery deadline for the electronic communication;
a number of contributors; and
work hours available to each of the plurality of contributors.

9. The system of claim 1, wherein the work flow system is to receive, from the originator, specification data according to which the electronic communication is automatically progressed by the workflow system to each of the plurality of contributors.

10. The system of claim 9, wherein the specification data specifies the respective time period provided to each of the plurality of contributors to provide the respective contribution relating to the electronic communication.

11. The system of claim 10, wherein the specification data specifies a respective task to be performed by each of the plurality of contributors with respect to the electronic communication.

12. The system of claim 11, wherein the respective task is at least one task selected from a group of tasks including a review task, an edit task, a modify task and a contribution task.

13. The system of claim 1, wherein the electronic communication system is automatically to present the electronic communication to each of the plurality of contributors in a time sequential manner.

14. The system of claim 13, wherein the electronic communication is an e-mail, and wherein the electronic communication system is an e-mail system to store the e-mail in an inbox of an e-mail application of each of the plurality of contributors.

15. The system of claim 13, wherein the electronic communication is a task, and wherein the electronic communication system is a personal information management system to store the task in a task list of a personal information management application of each of the plurality of contributors.

16. A method to automate provisioning of contributions from a plurality of contributors to an electronic communication, the method including:
receiving, from an originator of the electronic communication, identifiers for the plurality of contributors to the electronic communication, the identifiers being received as a concurrent input at an electronic communication system; and
using the identifiers, automatically progressing the electronic communication to each of the plurality of contributors, the automatic progressing of electronic communication enabling each of the plurality of contributors to perform a respective task with respect to the electronic communication.

17. The method of claim 16, wherein the automatic progressing of the electronic communication, once initiated, occurs without further progression input from the originator of the electronic communication.

18. The method of claim 16 or 17, including communicating the electronic communication to a recipient on the occurrence of a predetermined delivery event.

19. The method of claim 18, wherein the predetermined delivery event is at least one of a group of events including:
completion of a last task by a last contributor of the plurality of contributors;
an expiration of an overall contribution time period with respect to the electronic communication; and
receipt of approval, from the originator, for the electronic communication to be sent to the recipient.

20. The method of claim 16, wherein the automatic progressing of the electronic communication includes providing each of the plurality of contributors with a respective time period to perform the respective task with respect to the electronic communication.

21. The method of claim 20, wherein the respective time period provided to each of contributors to perform the respective task is specified in terms of a workflow stored at a workflow system.

22. The method of claim 20, including automatically determining, at the electronic communication system, the respective time period provided to each of the plurality of contributors to perform the respective task with respect to the electronic communication.

23. The method of claim 22, wherein the automatic determination of the respective time period provided to each of the plurality of contributors is performed based on at least one of a delivery deadline for the electronic communication, a number of contributors, and work hours available to each of the plurality of contributors.

24. The method of anyone of claims 16 to 23, including receiving, from the originator, specification data according to which the electronic communication is automatically progressed to each of the plurality of contributors.

25. The method of claim 24, wherein the specification data specifies the respective time period provided to each of the plurality of contributors to perform the respective task with respect to the electronic communication.

26. The method of claim 24, wherein the specification data specifies the respective task to be performed by each of the plurality of contributors with respect to the electronic communication.

27. The method of anyone of claims 16 to 26, wherein the respective task is at least one task selected from a group of tasks including a review task, an edit task, a modify task and a contribution task.

28. The method of anyone of claims 16 to 27, wherein each of the respective tasks is specified in terms of a workflow stored at a workflow system.

29. The method of claim 16, wherein the automatic progressing of the electronic communication includes automatically presenting the electronic communication to each of the plurality of contributors in a time sequential manner.

30. The method of claim 29, wherein the electronic communication is an e-mail, and the presenting of the electronic communication includes storing the e-mail in an inbox of an e-mail application of each of the plurality of contributors.

31. The method of claims 29, wherein the electronic communication is a task, and the presenting of the electronic communication includes storing the task in a task list of a personal information management application of each of the plurality of contributors.

32. A machine-readable medium embodying a set of instructions that, when executed by a machine, cause the machine to perform the method of claim 16.

## Amended claims

### Amended claims in accordance with Rule 86(2) EPC.

**1.** A system to automate provision of contributions from a plurality of contributors (26 to 32) to an electronic communication (50), the system including:
an electronic communication system (12) to receive, from an originator (23) of the electronic communication (50), identifiers for the plurality of contributors to the electronic communication, the identifiers being received as a single input at the electronic communication system; and
a workflow system (14) to automatically progress the electronic communication (50) to each of the plurality of contributors (26 to 32), the automatic progressing of electronic communication by the workflow system being performed utilizing the identifiers, and enabling each of the plurality of contributors to provide a respective contribution relating to the electronic communication.

**2.** The system of claim 1, wherein the workflow system (14) is to automatically progress the electronic communication, once the progression has been initiated, without further progression input from the originator (23) of the electronic communication.

**3.** The system of claim 1 or 2, wherein the electronic communication system is to communicate the electronic communication to a recipient (33) on the occurrence of a predetermined delivery event.

**4.** The system of claim 3, wherein the predetermined delivery event is at least one of a group of events including:
completion of a last task by a last contributor of the plurality of contributors;
an expiration of an overall contribution time period with respect to the electronic communication; and
receipt of approval, from the originator, for the electronic communication to be sent to the recipient.

**5.** The system of claim 1, wherein the workflow system is to provide each of the plurality of contributors (26 to 32) with a respective time period within which to provide the respective contribution relating to the electronic communication.

**6.** The system of claim 5, wherein the workflow system (14) is to instantiate a workflow (46), the workflow specify the respective time period for each of contributors to provide the respective contribution to the electronic communication

**7.** The system of claim 6, wherein the workflow system is automatically to determine the respective time period for each of the plurality of contributors.

**8.** The system of claim 7, wherein the workflow system is to automatically determine the respective time period for each of the plurality of contributors based on at least one of:
a delivery deadline for the electronic communication;
a number of contributors; and
work hours available to each of the plurality of contributors.

**9.** The system of claim 1, wherein the work flow system is to receive, from the originator, specification data according to which the electronic communication is automatically progressed by the workflow system to each of the plurality of contributors.

**10.** The system of claim 9, wherein the specification data specifies the respective time period provided to each of the plurality of contributors to provide the respective contribution relating to the electronic communication.

**11.** The system of claim 10, wherein the specification data specifies a respective task to be performed by each of the plurality of contributors with respect to the electronic communication.

**12.** The system of claim 11, wherein the respective task is at least one task selected from a group of tasks including a review task, an edit task, a modify task and a contribution task.

**13.** The system of claim 1, wherein the electronic communication system (12) is automatically to present the electronic communication (50) to each of the plurality of contributors in a time sequential manner.

**14.** The system of claim 13, wherein the electronic communication (50) is an e-mail, and wherein the electronic communication system (12) is an e-mail system to store the e-mail in an inbox of an e-mail application of each of the plurality of contributors (26 to 32).

**15.** The system of claim 13, wherein the electronic communication is a task, and wherein the electronic communication system is a personal information management system to store the task in a task list of a personal information management application of each of the plurality of contributors.

**16.** A method to automate provisioning of contributions from a plurality of contributors to an electronic communication (50), the method including:
receiving at an electronic communication system (12), from an originator (23) of the electronic communication, identifiers for the plurality of contributors to the electronic communication, the identifiers being received as a concurrent input at an electronic communication system; and
using the identifiers, automatically progressing the electronic communication (50) to each of the plurality of contributors by a workflow system (14), the automatic progressing of electronic communication by the workflow system enabling each of the plurality of contributors to perform a respective task with respect to the electronic communication.

**17.** The method of claim 16, wherein the automatic progressing of the electronic communication (50), once initiated, occurs without further progression input from the originator (23) of the electronic communication.

**18.** The method of claim 16 or 17, including communicating the electronic communication to a recipient (33) on the occurrence of a predetermined delivery event.

**19.** The method of claim 18, wherein the predetermined delivery event is at least one of a group of events including:
completion of a last task by a last contributor of the plurality of contributors;
an expiration of an overall contribution time period with respect to the electronic communication; and
receipt of approval, from the originator, for the electronic communication to be sent to the recipient.

**20.** The method of claim 16, wherein the automatic progressing of the electronic communication includes providing each of the plurality of contributors with a respective time period to perform the respective task with respect to the electronic communication.

**21.** The method of claim 20, wherein the respective time period provided to each of contributors to perform the respective task is specified in terms of a workflow stored at a workflow system.

**22.** The method of claim 20, including automatically determining, at the electronic communication system, the respective time period provided to each of the plurality of contributors to perform the respective task with respect to the electronic communication.

**23.** The method of claim 22, wherein the automatic determination of the respective time period provided to each of the plurality of contributors is performed based on at least one of a delivery deadline for the electronic communication, a number of contributors, and work hours available to each of the plurality of contributors.

**24.** The method of anyone of claims 16 to 23, including receiving, from the originator, specification data according to which the electronic communication is automatically progressed to each of the plurality of contributors.

**25.** The method of claim 24, wherein the specification data specifies the respective time period provided to each of the plurality of contributors to perform the respective task with respect to the electronic communication.

**26.** The method of claim 24, wherein the specification data specifies the respective task to be performed by each of the plurality of contributors with respect to the electronic communication.

**27.** The method of anyone of claims 16 to 26, wherein the respective task is at least one task selected from a group of tasks including a review task, an edit task, a modify task and a contribution task.

**28.** The method of anyone of claims 16 to 27, wherein each of the respective tasks is specified in terms of a workflow stored at a workflow system.

**29.** The method of claim 16, wherein the automatic progressing of the electronic communication includes automatically presenting the electronic communication to each of the plurality of contributors in a time sequential manner.

**30.** The method of claim 29, wherein the electronic communication is an e-mail, and the presenting of the electronic communication includes storing the e-mail in an inbox of an e-mail application of each of the plurality of contributors.

**31.** The method of claims 29, wherein the electronic communication is a task, and the presenting of the electronic communication includes storing the task in a task list of a personal information management application of each of the plurality of contributors.

**32.** A machine-readable medium embodying a set of instructions that, when executed by a machine, cause the machine to perform the method of claim 16.
